(19) Europäisches Patentamt
European Patent Office
Office européen des brevets

(11) **EP 1 671 552 B1**

(12) **EUROPEAN PATENT SPECIFICATION**

(45) Date of publication and mention
of the grant of the patent:
**07.05.2008 Bulletin 2008/19**

(51) Int Cl.:
*A23L 1/305* (2006.01)   *A23J 3/16* (2006.01)

(21) Application number: **05026319.3**

(22) Date of filing: **02.12.2005**

(54) **Soy protein-containing composition having improved functionality**

Zusammensetzung enthaltend Sojaprotein mit überlegenen funktionellen Eigenschaften

Composition à base de protéines de soja aux propriétés fonctionelles supérieures

(84) Designated Contracting States:
**DK ES FR GB NL PL**

(30) Priority: **06.12.2004 US 5917**

(43) Date of publication of application:
**21.06.2006 Bulletin 2006/25**

(73) Proprietor: **SOLAE, LLC**
**St. Louis, MO 63102 (US)**

(72) Inventor: **Mozaffar, Zahid**
**Ballwin, Missouri (US)**

(74) Representative: **Hirsch, Marc-Roger et al**
**Hirsch & Associés**
**58, Avenue Marceau**
**75008 Paris (FR)**

(56) References cited:
**EP-A- 1 129 626**          **WO-A-03/094627**
**US-A1- 2003 211 225**      **US-A1- 2004 043 127**
**US-A1- 2004 265 426**      **US-B1- 6 423 364**
**US-B1- 6 465 037**

• **HIROTSUKA M. ET AL: "Increase in emulsification activity of soy lecithin-soy protein complex by ethanol and heat treatments" JOURNAL OF FOOD SCIENCE, vol. 49, no. 4, 1984, pages 1105-1110, XP009065014**
• **KITO M., HIROTSUKA M., TANIGUCHI H., NARITA H.: "Increase in emulsification activity and calcium fortification in soy protein by using soy lecithin-soy protein complex" NUTRITIONAL SCIENCE OF SOY PROTEIN, vol. 6, no. 1, 1985, pages 15-20, XP009064988**

**Description**

BACKGROUND OF THE INVENTION

The present invention generally relates to a soy protein-containing composition having improved functionality for use in meat products and processes for making such soy protein-containing compositions. More particularly, the present invention relates to soy protein-containing compositions having improved gel-strength, solubility, and salt tolerance when used in meat products.

Plant protein materials are used as functional food ingredients, and have numerous applications in enhancing desirable characteristics in food products. In particular, because of their high protein content and low oligosaccharide/carbohydrate content, soy protein products are some of the most commonly used functional food ingredients. For example, soy protein materials can be used as emulsifiers in meats, such as hot dogs, to bind the meat and give the meat a good texture and firm bite. Another common application for soy protein materials as functional food ingredients is in creamed soups, gravies, and yogurts, where the soy protein material acts as a thickening agent and provides a creamy viscosity to the food product.

Soy flakes, which are commonly used to produce soy proteins for use in foods and food products, are generally produced by dehulling, defatting, and grinding the soybean and typically contain less than about 65% (by weight) soy protein on a moisture-free basis. Soy flakes also contain soluble carbohydrates, insoluble carbohydrates such as soy fiber, and fat inherent in soy. Soy flakes may be defatted, for example, by extraction with hexane. Soy flours, soy grits, and soy meals are produced from soy flakes by comminuting the flakes in grinding and milling equipment such as a hammer mill or an air jet mill to a desired particle size. The comminuted materials are typically heat treated with dry heat or steamed with moist heat to "toast" the ground flakes and inactivate anti-nutritional elements present in soy such as Bowman-Birk and Kunitz trypsin inhibitors. Heat treating the ground flakes in the presence of significant amounts of water is avoided to prevent denaturation of the soy protein in the material and to avoid costs involved in the addition and removal of water from the soy material. The resulting ground, heat treated material is a soy flour, soy grit, or a soy meal, depending on the average particle size of the material. Soy flour generally has a particle size of less than about 150 $\mu$m. Soy grits generally have a particle size of about 150 to about 1000 $\mu$m. Soy meal generally has a particle size of greater than about 1000 $\mu$m.

Soy protein concentrates typically contain about 65% (by weight) to about 85% (by weight) soyprotein, with the major non-protein component being fiber. Soy protein concentrates are typically formed from defatted soy flakes by washing the flakes with either an aqueous alcohol solution or an acidic aqueous solution to remove the soluble carbohydrates from the protein and fiber.

Soy protein isolates, which are more highly refined soy protein materials, are processed to contain at least 90% (by weight) soy protein on a moisture free basis and little or no soluble carbohydrates or fiber. Soy protein isolates are typically formed by extracting soy protein and water soluble carbohydrates from defatted soy flakes or soy flour with an alkaline aqueous extractant. The aqueous extract, along with the soluble protein and soluble carbohydrates, is separated from materials that are insoluble in the extract, mainly fiber. The extract is typically then treated with an acid to adjust the pH of the extract to the isoelectric point of the protein to precipitate the protein from the extract. The precipitated protein is separated from the extract, which retains the soluble carbohydrates, and is dried after being adjusted to a neutral pH or is dried without any pH adjustment.

Soy protein concentrates and soy protein isolates are particularly effective functional food ingredients due to the versatility of soy protein and the relatively high content thereof in soy protein concentrates and isolates. Additionally, the lack of raffinose and stachyose oligosaccharides, which naturally occur in soybeans, is advantageous. Humans lack the $\alpha$-galactosidase enzyme needed to break down and digest complex oligosaccharides such as raffinose and stachyose into simple carbohydrates such as glucose, fructose, and sucrose, which can be easily absorbed by the gut. Instead of being absorbed, soy raffinose and stachyose enter the lower intestine where they are fermented by bacteria to cause intestinal gas and flatus.

There have been many attempts to use soy protein concentrates and isolates as ingredients to improve the functionality of food products. *See generally,* U.S. Patent Nos. 6,465,037, 6,423,364, and 6355295 issued to Altemueller, et al. However, it has been found that these food ingredients may not always be effective in improving the functionality of food products in a salty environment, such as that in commercially available meats and meat products. Specifically, most commercially available meats and meat products contain about 2% salt (by weight of the product),

As such, a need exists in the industry for a soy protein-containing composition having improved functionality, and specifically, salt tolerance. Additionally, it would be advantageous if the soy protein-containing composition is capable of improving functionality in meats and meat products.

SUMMARY OF THE INVENTION

In one embodiment, the present invention provides soy protein-containing compositions for use in meats and meat products. These compositions provide the meat or meat products with improved functionality, specifically, gel strength, solubility, and water holding capacity, even in an environment comprising salt. The present invention also provides processes for preparing the soy protein-containing compositions.

As such, the present invention is directed to a soy protein-containing composition. The soy protein-containing composition comprises from 98.5% (by weight dry basis) to 99.5% (by weight dry basis) precipitated soy protein curd and from 0.5% (by weight dry basis) to 1.5% (by weight dry basis) lecithin, wherein the precipitated soy protein curd comprises from 65% (by weight curd) to 85% (by weight curd) soy protein, from 10% (by weight curd) to 20% (by weight curd) carbohydrate, from 0.5% (by weight curd) to 2.0% (by weight curd) fat, from 3.0% (by weight curd) to 8.0% (by weight curd) ash, and from 1.0% (by weight curd) to 10% (by weight curd) moisture. The lecithin has an HLB value of from 4 to 1.0.

The present invention is further directed to a process of producing a soy protein-containing composition. The process comprises extracting a soy protein concentrate from soy flakes with an aqueous alcohol wash; suspending the extracted soy protein concentrate with a wash solution comprising water; contacting the suspended soy concentrate with an acid to form a precipitated soy protein curd; contacting the precipitated soy protein curd with a hydrating solution comprising water to form a soy protein curd suspension; contacting the soy protein curd suspension with a basic solution to form a neutralized soy protein curd suspension; introducing lecithin to the neutralized soy protein curd suspension to form a lecithin-neutralized soy protein curd suspension; heating the lecithin-neutralized soy protein curd suspension; and drying the heated lecithin-neutralized soy protein curd suspension to form a soy protein-containing composition. The lecithin utilized has an HLB value of from 4 to 10.

Other features and advantages of this invention will be in part apparent and in part pointed out hereinafter.

DETAILED DESCRIPTION OF THE PREFERRED EMBODIMENTS

The present invention is generally directed to soy protein-containing compositions and processes for their manufacture. Specifically, the present invention relates to a soy protein-containing composition comprising a lecithin having a hydrophilic/lipophilic balance (HLB) value of from about 4 to about 10. The compositions have improved functionality and are suitable for use in meats and meat products. Specifically, the compositions have improved gel strength, solubility, and salt tolerance.

In one embodiment, the soy protein-containing composition comprises a precipitated soy protein curd and lecithin. As used herein, the term "precipitated soy protein curd" means a soy protein concentrate that has been through several steps of processing, including extraction, suspension in water, and precipitation in an acid solution (i.e., an aqueous solution having a pH of less than 7.0). The soy protein concentrate is typically extracted through an alcohol wash extraction. Extraction processes for forming soy protein concentrates are well known and disclosed, for example, in U.S. Patent Nos. 6,187,367, issued to Cho, et al. (February 13, 2001) and 6,132,795, issued to Holbrook, et al. (October 17, 2000).

One extraction process suitable for preparing a precipitated soy protein curd for use in the compositions described herein includes cracking soybeans to remove the hull, rolling them into flakes with flaking machines, subjecting the flakes to a solvent extraction process, suspending the extracted soy protein in a wash solution, and precipitating a precipitated soy protein curd therefrom. Suitable flaking machines consist of a pair of horizontal counter-rotating smooth steel rolls. The rolls are pressed one against the other by means of heavy springs or by controlled hydraulic systems. The soybeans are fed between the rolls and are flattened as the rolls rotate one against the other. The roll-to-roll pressure can be regulated to determine the average thickness of the flakes. The rolling process disrupts the oil cell, facilitating solvent extraction of the oil. Specifically, flaking increases the contact surface between the oilseed tissues and the solvent, and reduces the distance that the solvent and the extract will have to travel in the extraction process as described herein below. Typical values for flake thickness are in the range of 0.2 to 0.35 millimeters.

The defatted soy flake material may then be put through a solvent extraction process. Typically, the solvent for the extraction process is an aqueous acid or alcohol wash. The aqueous acid or alcohol wash removes materials soluble therein, including a substantial portion of the isoflavones and carbohydrates. This produces a protein concentrate material that contains from about 65% to about 85% protein by weight on a dry basis, but which is significantly reduced in isoflavone concentration.

Alcohol extraction to remove alcohol soluble components from the protein is particularly preferred in the solvent extraction process since alcohol extraction generally produces a better tasting soy protein material compared to aqueous acid extraction. This type of extraction is based on the ability of the wash solvent solutions to extract the soluble sugar/carbohydrate fraction of the defatted soy flake without solubilizing its proteins. A suitable alcohol solvent is an aqueous solution of lower aliphatic alcohols, such as, methanol, ethanol, and isopropyl alcohol,

Typically, the alcohol wash should be a food grade reagent, and preferably is an aqueous ethanol solution. An aqueous ethanol solution may contain from about 55% to about 90% ethanol by volume. The soy flake material should be contacted with sufficient wash solution to form a soy protein concentrate containing between 65% and 85% protein, by dry weight. The weight ratio of wash solution to soy flake material may be from about 2:1 to about 20:1, and preferably is from about 5:1 1 to about 10:1. Preferably the soy flake material is agitated in the wash solution and then centrifuged for a period of time to facilitate removal of materials soluble in the wash solution from the soy flake material. The wash solution is then decanted from the soy flake material to provide the soy protein concentrate. The wash solution is recirculated through the extractor until the residual oil content in the soy flakes is reduced to the desired level. The above described alcohol wash extraction removes alcohol soluble components of the soy protein-containing material,

Once the soy protein concentrate has been extracted, the concentrate is suspended in a wash solution. Typically, the wash solution comprises water having a temperature of about 130°F.

Finally, a precipitated soy protein curd is precipitated with an acid. Precipitation removes remaining impurities, such as carbohydrates and fats, from the soy protein concentrate, Typically, the acid is hydrochloric acid (HC1) and is used to produce apH with about 4.0 to about 5.0 to form the precipitated soy protein curd,

Typically, the soy protein-containing compositions of the present invention comprise from 98.5% (by weight dry basis) to 99.5% (by weight dry basis) precipitated soy protein curd. More suitably, the soy protein-containing compositions of the present invention comprise 99% (by weight dry basis) precipitated soy protein curd,

In order to impart the desired level of soy protein into the soy protein-containing composition described herein, suitable precipitated soy protein curds comprise from 65% (by weight dry basis) to 85% (by weight dry basis) soy protein. More suitably, the precipitated soy protein curd comprises about 70% (by weight dry basis) soy protein.

In addition to the soy protein, the total protein concentration in the precipitated soy protein curd is also comprised of wheat gluten. Gluten is defined generally as a protein substance that remains when starch is removed from cereal grains, such as wheat, rye, and oat grains. Wheat gluten is gluten prepared from wheat Wheat gluten provides for a chewy, elastic, or spongy texture in a finished food product, thereby imitating the texture of meat.

In addition to the soy protein and wheat gluten that comprise the total amount of protein in the precipitated soy protein curd, the precipitated soy protein curd generally comprises from 10% (by weight curd) to 20% (by weight curd) carbohydrate, from 0.5% (by weight curd) to 2.0% (by weight curd) fat, from 3.0% (by weight curd) to 8.0% (by weight curd) ash, and from 1.0% (by weight curd) to 10% (by weight curd) moisture.

A soy protein concentrate suitable for modification and subsequent use in the present invention is Procon 2000, commercially available from The Solae Company (St. Louis, Missouri). Procon 2000 is an extracted soy protein concentrate comprising 70% (by weight curd) soy protein; 18% (by weight curd) carbohydrates; 1% (by weight curd) fat; 6% (by weight curd) ash; and 5% (by weight curd) moisture. When this, or a similar commercially available soy protein concentrate is utilized, it is first suspended in water and precipitated with an acid to produce a precipitated soy protein curd suitable for use in the soy protein-containing composition of the present invention.

In addition to the precipitated soy protein curd, the soy protein-containing composition comprises lecithin (phosphatidylcholine), Lecithin is a mixture of fatty substances that are derived from the processing of soybeans. Lecithin can be separated from soybean oil by conventional means including through the addition of water and centrifugation or steam precipitation. Specifically, soy lecithin comprises three types of phospoholipids: phosphatidylcholine, phosphatidylethanolamine, and phosphotidylinositol.

Soy lecithin for use in the present invention comprises an acetone soluble fraction and an acetone insoluble fraction. Suitably, the lecithin comprises an acetone insoluble fraction of from about 45% (by weight lecithin) to about 60% (by weight lecithin), more suitablyftom about 52% (by weight lecithin) to about 55% (by weight lecithin).

Lecithin has been used in foods and food products to date as an emulsifier, stabilizer, and antioxidant. For example, it has been used to promote solidity in margarine and to give consistent texture to dressings and other creamy products. Lecithin has also been used in chocolates and coatings and to counteract spattering during fiying.

In addition to the above functions, it has been discovered in the present invention that when lecithin is added during one or more specific stages of the processing of the soy protein-containing compositions of the present invention, the lecithin can improve the functionality of the soy protein-containing compositions. Specifically, it has been discovered that lecithin can improve the gel strength, solubility, and salt tolerance of the soy protein-containing compositions in meat and other food products.

The lecithin employed in the soy protein-containing compositions described herein can be characterized in terms of its hydrophilic/lipophilic balance (HLB). HLB is an empirical number that describes the relationship between the hydrophilic or water-soluble and lipophilic or oil-soluble portions of a molecule. Oil-soluble molecules have low HLB numbers and water-soluble molecules have high HLB numbers. HLB can be calculated based on the chemical structure using techniques well known to those skilled in the art. The HLB of the lecithins used in the present invention suitably falls within the range of from about 4 to about 10. More suitably, the HLB of the lecithins fall within the range of from about 4 to about 7.

The soy protein-containing compositions of the present invention typically comprise from 0.5% (by weight dry basis) to 1.5% (byweight dry basis) lecithin. More suitably, the soyprotein-containing compositions comprise 1.0% (by weight dry basis) lecithin. Suitable soy lecithins for use in the present invention include, for example, commercially available products such as ACTIFLO 68-UB, CENTROPHASE C, CENTROPHASE 152, CENTROPHASE F, CENTROPHASE HR-4B, CENTROLENE A, PRECEPT 8120, and STERNTHIL MB-58, which is non-genetically modified and identity preserved (IP) (The Solae Company, St. Louis, Missouri).

In addition to the precipitated soy protein curd and lecithin, the soyprotein-containing compositions may further comprise a sucrose ester. Sucrose esters are used in foods and food products to improve elasticity and juiciness, Additionally, sucrose esters have been found to improve the water holding capacity of meat products comprising the soy protein-containing compositions.

Suitable sucrose esters for use in the present invention include sucrose esters comprising a fatty acid selected from the group consisting of stearic acid, palmitic acid, and lauric acid. For example, suitable sucrose esters include DK ESTER F-10, DK ESTER F-20, DK ESTER F-50, DK ESTER F-70, DK ESTER F-90, DK ESTER F-1 10, DKF ESTERF-140, and DK ESTER F-160, all commercially available from Dai-Ichi Kogyo Seiyaku Co., Ltd. (Tokyo, Japan). Also suitable for the present invention are RYOTO ESTERS L-595, LWA-1570, L-1695, P-1670, and S-1570, which are commercially available from Mitsubishi-Kagaku Foods Corporation (Tokyo, Japan).

Suitably, the soy protein-containing compositions of the present invention comprise from 0.5% (by weight dry basis) to 1.5% (by weight dry basis) sucrose ester. More suitably, the soy protein-containing compositions of the present invention comprise about 1% (by weight dry basis) sucrose ester.

In another embodiment, the soyprotein-containing composition may further comprise a fatty acid or its sodium salt. Fatty acids are valuable for use in foods and food products for their structural, textural and stability properties. Specifically, fatty acids have been shown to improve gel strength and translucency. Suitable fatty acids include $C_8$-$C_{18}$ fatty acids, for example, caprylic acid, capric acid, lauric acid, sodium laurate, myristic acid, palmitic acid, and stearic acid, and combinations thereof.

Suitably, the soy protein-containing compositions of the present invention comprise from 0.5% (by weight dry basis) to 1.5% (by weight dry basis) of a fatty acid or its sodium salt. More suitably, the soy protein-containing compositions of the present invention comprise about 1% (by weight dry basis) of a fatty acid or its sodium salt.

As noted above, the soy protein-containing compositions of the present invention have an improved cooked gel strength. Having improved cooked gel strength will provide for a food product to have improved texture and bite. "Cooked gel strength" as used herein is a measure of the strength of a gel of a soy material following heating the material in boiling water for 3 0 minutes and then allowing the material to cool for 30 minutes under 27°C $\pm$ 5C° tap water. One suitable method for measuring the cooked gel strength of a soyprotein-containing composition includes: mixing 2315 grams tap water and 385 grams $\pm$0.1 gram precipitated soy protein curd in a chopper bowl for 8 minutes to form a gel; removing 1300 $\pm$ 5 grams of gel and filling four separate cans about 1/2 to about 3/4 full of gel; to the remaining gel in the chopper bowl, resuming chopping and add 28.0 grams of salt; filling four cans about 1/2 to about 3/4 full with gel containing salt; tapping all eight cans on a hard surface to compress the gels, Once the gels are prepared, place 4 cans (2 with salt and 2 without salt) in a kettle containing rapidly boiling water and heat for 30 minutes. Immediately after heating is completed, remove the cans and allow them to cool for 30 minutes under 27°C $\pm$ 5C° tap water. After cooling, place the cans in refrigerated storage for 16-24 hours. The cooked gel strength of the soy protein-containing gels is then measured using a TA.TXT2 Texture Analyzer, manufactured by Stable Micro Systems Ltd. (England).

Typically, cooked gel strength is evaluated in terms of grams. In one embodiment, cooked gel strength is measured in an environment substantially free of salt. As stated above, in another embodiment, cooked gel strength is measured in an environment with 2% (by weight) salt. It is advantageous to have improved gel strength in an environment comprising salt as commercially available meats and meat products comprising the soy protein containing-compositions comprise 2% salt.

Cooked gel strength of the soy protein containing composition of the present invention measured in an environment with 2% (by weight) salt has a value of at least 1800 grams, more suitably of at least 2000 grams, and even more suitably of at least 2200 grams. Cooked gel strength of the soy protein containing composition of the present invention measured in an environment substantially free of salt has a value of at least 1500 grams, more suitably of at least 1800 grams, and even more suitably of at least 2000 grams.

In addition to having improved cooked gel strength, the soy protein-containing compositions of the present invention have improved solubility in water. Solubility of the proteins contained in the soy protein-containing composition is generally determined by preparing an aqueous dispersion of the soy protein-containing composition containing a known quantity of protein, centrifuging the composition to produce a centrifugate, and analyzing the centrifugate to determine its protein content. The amount of protein present in the centrifugate may be determined using various methods generally known in the art and maybe determined using a UV-Spectrophotometer. Such methods include, for example, A,O.C.S. (American Oil Chemists' Society) Official Methods Ba 11-65, Revised (1969), Bc 4-91(1997), Aa 5-91(1997), or Ba 4d-90(1997),

In accordance with the present invention, at a pH of 7.0 and a temperature of about 25°C, typically at least about 70% of the soy proteins remain in solution after centrifuging the sample, more typically at least about 80% and, still more typically, at least about 90%.

The solubility of the proteins may also be expressed in terms of the Nitrogen Solubility Index (NSI). NSI as used herein is defined as:

$$NSI = (\% \text{ water soluble nitrogen of a protein containing sample}/\% \text{ total nitrogen in protein containing sample}) \times 100.$$

The NSI provides a measure of the percent of water soluble protein relative to total protein in a protein containing material. The NSI of a soy protein material is measured in accordance with standard analytical methods, specifically A.O.C.S. Method Ba 11-65, which is incorporated herein by reference in its entirety. According to the Method Ba 11-65, a soy material sample (5 grams) ground fine enough so that at least 95% of the sample will pass through a U.S. grade 100 mesh screen (average particle size of less than about 150 microns) is suspended in distilled water (200 ml), with stirring at 120 revolutions per minute (rpm), at 30°C for two hours; the sample is then diluted to 250 milliliters with additional distilled water. If the soy material is a full-fat material the sample need only be ground fine enough so that at least 80% of the material will pass through a U.S. grade 80 mesh screen (approximately 175 $\mu$m), and 90% will pass through a U.S. grade 60 mesh screen (approximately 205 $\mu$m). Dry ice should be added to the soy material sample during grinding to prevent denaturation of the sample. Sample extract (40 ml) is decanted and centrifuged for 10 minutes at 1500 rpm, and an aliquot of the supernatant is analyzed for Kjeldahl protein (PRKR) to determine the percent of water soluble nitrogen in the soy material sample according to A.O.C.S Official Methods Bc 4-91 (1997), Ba 4d-90, or Aa 5-91, each hereby incorporated by reference in their entirety. A separate portion of the soy material sample is analyzed for total protein by the PRKR method to determine the total nitrogen in the sample. The resulting values of Percent Water Soluble Nitrogen and Percent Total Nitrogen are utilized in the formula above to calculate the nitrogen solubility index,

Typically, the soy protein-containing compositions of the present invention have a Nitrogen Solubility Index of at least 70% and more typically at least 80%.

Additionally, the soy protein-containing compositions of the present invention have an improved salt tolerance index. As used herein, the term "salt tolerance index" means the dispersible nitrogen content (expressed as protein) of a soy-containing material in the presence of salt. The salt tolerance index measures the solubility of protein in water in the presence of salt.

The salt tolerance index of the soy protein-containing compositions described herein may be determined utilizing the following method: 0.75 grams of sodium chloride is weighed and added to a 400-milliliter beaker, One hundred fifty milliliters of water at 30°C is added to the beaker, and the salt is dissolved completely in the water. The salt solution is added to a mixing chamber, and 5 grams of a soy material sample is added to the salt solution in the mixing chamber. The sample and salt solution are blended for 5 minutes at 7000 revolutions per minute (rpm). The resulting slurry is transferred to a 400-milliliter beaker, and 50 milliliters of water is used to rinse the mixing chamber. The 50-milliliter rinse is added to the slurry. The beaker of the slurry is placed in 30°C water bath and is stirred at 120 rpm for a period of 60 minutes. The contents of the beaker are then quantitatively transferred to a 250-milliliter volumetric flask using deionized water. The slurry is diluted to 250 milliliters with deionized water, and the contents of the flask are mixed thoroughly by inverting the flask several times. Forty-five milliliters of slurry are transferred to a 50-milliliter centrifuge tube and the slurry is centrifuged for 10 minutes at 500 X g. The supernatant is filtered from the centrifuge tube through filter paper into a 100-milliliter beaker. Protein content analysis is then performed on the filtrate and on the original dry soy material sample according to A.O.C.S. Official Methods Bc4-91 (1997), Ba 4d-90, or Aa 5-91. The salt tolerance index (STI) is then calculated according to the following formula:

$$STI\ (\%) = 100 \times 50 \times [(\text{Percent soluble protein (in filtrate)})/(\text{Percent total protein (of dry soy protein-containing material)})]$$

Typically, the soy protein-containing composition of the present invention has a STI of at least about 70%. More typically, the soy protein-containing composition of the present invention has a STI of at least about 75%. Even more typically, the soy protein-containing composition of the present invention has a STI of at least about 80%,

In addition to the soy protein-containing composition, the present invention is also directed to processes for preparing these soyprotein-containing compositions, In one embodiment, the process comprises a number of steps including: (1) extracting a soyprotein concentrate from soy flakes with an aqueous alcohol wash; (2) suspending the extracted soy protein concentrate in awash solution comprising water; (3) contacting the suspended soy concentrate with an acid to form a precipitated soy protein curd; (4) contacting the precipitated soy protein curd with a hydrating solution comprising water to form a soy protein curd suspension; (5) contacting the soy protein curd suspension with a basic solution to form a neutralized soyprotein curd suspension; (6) introducing lecithin into the neutralized soy protein curd suspension to form a lecithin-neutralized soy protein curd suspension; (7) heating the lecithin-neutralized soy protein curd suspension; and (8) drying the heated lecithin-neutralized soy protein curd suspension to form a soy protein-containing composition.

As noted above, a soy protein concentrate can be obtained by processing a soy protein source, such as soy flakes, by an extraction process using an alcohol wash solution as described herein. This extraction process removes the alcohol soluble components from the soybean to produce a soy protein concentrate having from 65% (by weight dry basis) to 85% (by weight dry basis) soy protein. As noted above, a suitable soy concentrate for use in the process of the present invention is Procon 2000, commercially available from The Solae Company (St. Louis, Missouri).

Once the soy protein concentrate is obtained, the soy protein concentrate is suspended in a wash solution comprising water. In a suitable embodiment, the extracted soy concentrate is suspended for 10 minutes at a temperature of 130°F. This water wash suspension removes the water soluble components of the extracted soy protein concentrate, such as carbohydrates and fat.

The suspended soy concentrate is then contacted with an acid to form a precipitated soy protein curd from the rest of the soy concentrate, such as remaining carbohydrates and fat. To allow for sufficient precipitation, the acid is contacted with the suspended soyprotein concentrate for a time period of about 5 minutes. Typically, an acid suitable for precipitation in the process of the present invention has a pH of about 4.5. Suitable acids for precipitation can include, for example, hydrochloric acid, phosphoric acid, and other organic or inorganic acids.

The above suspension and precipitation steps can optionally be repeated to further remove impurities, such as carbohydrates and fat, from the precipitated soy protein curd.

After sufficient extraction and precipitation, the precipitated soy protein curd is typically contacted with a hydrating solution comprising water to form a soy protein curd suspension. As used herein, the term "hydrating" refers to a static or dynamic soaking of the precipitated soy protein curd to introduce water therein. Typically, the precipitated soy protein curd is contacted with the hydrating solution for about 5 minutes. Suitably, hydration occurs by contacting the precipitated soy protein curd with a sufficient amount of a hydrating solution comprising water.

After the precipitated soy protein curd has been sufficiently hydrated to form a soy protein curd suspension, the soy protein curd suspension is contacted with a basic solution, such as sodium hydroxide (NaOH), or another suitable basic material to form a neutralized soyprotein curd suspension. The neutralized soy protein curd suspension has an increased pH. Typically, the soy protein curd suspension should be contacted with enough basic solution to raise the pH of the neutralized soy protein curd suspension to a pH of about 7.0 to about 8.0.

A neutralized soy protein curd suspension having a raised pH is desirable, as it has been found that soy protein-containing compositions processed in a higher pH have an improved water holding capacity. Suitably, in one embodiment the neutralized soy protein curd suspension has a pH of 7.2 when lecithin is introduced into the neutralized soy protein curd suspension. In another embodiment, the neutralized soy protein curd suspension has apH of about 8.0 when lecithin is introduced into the neutralized soy protein curd suspension.

As noted above, lecithin is introduced into the neutralized soy protein curd suspension to form a lecithin-neutralized soy protein curd suspension. As noted above, the addition of lecithin has been found to improve the functionality of the composition when added at specific stages of the process used in producing the soy protein-containing compositions of the present invention. For example, the soy protein-containing compositions of the present invention, which comprise lecithin, have improved gel strength, solubility, and salt tolerance.

In one embodiment, the lecithin is introduced into the neutralized soy protein curd suspension immediately after the pH of the neutralized soy protein curd suspension is raised by being contacted with the basic solution and prior to heating the lecithin-neutralized soy protein curd suspension as discussed herein below. In another embodiment, the lecithin is introduced into the neutralized soy protein curd suspension after the neutralized soyprotein curd suspension is heated. In addition to the above embodiments, the lecithin can be introduced into the neutralized soy protein curd suspension between a heating of the neutralized soy protein curd suspension and a heating of the lecithin-neutralized soy protein curd suspension.

Typically, from 0.5% (by weight dry basis) to 1.5% (by weight dry basis) lecithin must be introduced into the neutralized soy protein curd suspension. More typically, 1.0% (by weight dry basis) lecithin must be introduced into the neutralized soy protein curd suspension.

As noted above, lecithin for use in the soy protein-containing compositions of the present invention typically has an HLB value of from 4 to 10. More suitably, the lecithin for use in the soy protein-containing compositions of the present invention has an HLB value of from 4 to 7.

In addition to introducing the lecithin, as noted above, the process for producing the soy protein-containing compositions of the present invention, can further comprise introducing a sucrose ester into the neutralized soy protein curd suspension. The sucrose ester can further improve the water holding capacity of meats and meat products comprising the soy protein-containing composition of the present invention.

The sucrose ester can suitably be introduced into the neutralized soy protein curd suspension in an amount of from 0.5% (by weight dry basis) to 1.5% (by weight dry basis). More suitably, the sucrose ester can suitably be introduced into the neutralized soy protein curd suspension in an amount of 1.0% (by weight dry basis).

Additionally, the process for producing the soy protein-containing compositions of the present invention can further comprise introducing a fatty acid or its sodium salt into the neutralized soy protein curd suspension. As noted above, the fatty acids will improve the gel strength and translucency of the soy protein-containing composition. The fatty acids or their sodium salts can suitably be introduced into the neutralized soy protein curd suspension in an amount of from 0,5% (by weight dry basis) to 1.5% (by weight dry basis). More suitably, the fatty acids or their sodium salts can suitably be introduced into the neutralized soy protein curd suspension in an amount of 1.0% (by weight dry basis).

The process for making the soy protein-containing composition of the present invention further comprises a heat treatment. As noted above, heating can be carried out prior to or after lecithin has been introduced into the neutralized soy protein curd suspension. Additionally, heating can be carried out twice in the process of the present invention, both prior to and after introducing lecithin into the neutralized soy protein curd suspension.

Typically, the heat treatment comprises heating in a vacuum at a temperature of 150°C (300-305°F) and a pressure of 500 psig for 9 to 15 seconds. In one embodiment, heating can be completed in a vacuum at 305°F (152°C) and 500 psig for 15 seconds.

Finally, to produce the soy protein-containing compositions described herein, the heated lecithin-neutralized soy protein curd suspension is dried. In one embodiment, the heated lecithin-neutralized soy protein curd suspension can be dried by spray drying at a temperature of about 180°F (82°C).

As a result of the above processes, a soy protein-containing composition suitable for use in meats and meat products is made. In one embodiment, the soy protein-containing composition made by the processes of the present invention suitably comprises 98.5% (by weight dry basis) to 99.5% (by weight dry basis) precipitated soy protein curd and from 0.5% (by weight dry basis) to 1.5% (by weight dry basis) lecithin, wherein the precipitated soy protein curd comprises from 65% (by weight curd) to 85% (by weight curd) soy protein, from 10% (by weight curd) to 20% (by weight curd) carbohydrate, from 0.5% (by weight curd) to 2.0% (by weight curd) fat, from 3.0% (by weight curd) to 8.0% (by weight curd) ash, and from 1.0% (by weight curd) to 10% (byweight curd) moisture. As noted above, the soy protein-containing composition can optionally include sucrose esters and/or fatty acids. Typically, the sucrose esters are present in the soy protein-containing composition in an amount of from 0.5% (by weight dry basis) to 1.5% (by weight dry basis). The fatty acids or their sodium salts are typically present in the soy protein-containing composition in an amount of from 0.5% (by weight dry basis) to 1.5% (by weight dry basis).

As a result of the above processes, a soy protein-containing composition having improved solubility and salt tolerance is produced, As noted above, the soy protein-containing composition of the present invention will typically have a Nitrogen Solubility Index of at least 70% and more suitably at least 80%. Additionally, the soy protein-containing composition of the present invention will typically have a Salt Tolerance Index of at least 70%, more suitably at least 75%, and even more suitably at least 80%.

In addition to the improved solubility and salt tolerance, the soy protein-containing composition produced by the processes of the present invention can have an increased or reduced viscosity. Lower viscosity soy protein-containing compositions may be intended for use in liquid products (i.e., beverages); and additionally, in some embodiments, lower viscosity soy protein-containing compositions maybe desired for use in meat products. As shown below, lower viscosity soy protein-containing compositions allow for improved water holding capacity of the meat product comprising the composition. Higher viscosity compositions may also be desired when the intended applications for the composition include incorporation into a meat product.

As noted above, the soy protein-containing composition of the present invention can be heat treated (e.g., heated to a temperature of 150°C (from 300 to 305°F) for a period of from 9 to 15 seconds) prior to and/or after lecithin is introduced into the neutralized soy protein curd suspension. In certain embodiments, heat treatment after lecithin is introduced provides soy protein-containing compositions having higher viscosity than heat treated compositions without lecithin. As used herein, the term "viscosity" means the apparent viscosity of aqueous slurry or a solution as measured with a rotating spindle viscometer utilizing a large annulus, where a particularly preferred rotating spindly viscometer is a Brookfield viscometer. In another embodiment, the viscosity can be measured using a Rapid Visco Analyzer (RVA) viscometer,

In other embodiments, heat treatment prior to and after lecithin is introduced provides soy protein-containing compositions having lower viscosity than heat treated compositions without lecithin. Thus, heat treatment prior to and after lecithin introduction reduces the viscosity of the soyprotein containing composition.

The above soy protein-containing compositions can generally be used in processes to treat meat products to improve the functionality of the meat products. As used herein, the term "treated meat product" refers to meatproducts, wherein their ingredients have been mixed, injected, or cooked with the soy protein-containing compositions of the present invention.

Meat products that can be treated with the soy protein-containing compositions of the present invention can include, for example, hot dogs, sausages, bologna, ground and minced meats, and meat patties. In one embodiment, the meat product to be treated with the soyprotein-containing composition of the present invention is a hot dog. In this embodiment, once the soy protein-containing composition is prepared by one of the processes above, the composition is mixed in along with the other ingredients of the hot dog such as pork, chicken, spices, etc. The mixture is used to fill a cellulose casing and steamed at a temperature of 180°F (82°C),

Generally, treated meat products comprising the soy protein-containing composition manufactured in accordance with the present process exhibit improved hardness and chewiness when compared to untreated meat products. Without being bound to a particular theory, it is believed that the meat products treated with the soy protein-containing compositions of the present invention have improved functionality as a result of the soy protein-containing compositions acting as a binder between the protein and the other ingredients of the meat product. This allows for an improved water holding capacity and for improved hardness and chewiness. Hardness and chewiness are expressed in terms of grams and may be determined using a TA.TXT2 Texture Analyzer, manufactured by Stable Micro Systems, Ltd, (England).

In one embodiment, the hardness and chewiness are measured as "hot hardness" and "hot chewiness", which is a measurement taken after heating the treated meat product in boiling water for 5 to 7 minutes or until the internal temperature of the treated meat product reaches 160°F (71°C). In another, embodiment, the hardness and chewiness are measured as "cold" hardness and chewiness, which are measurements taken at room temperature (i.e., about 77°F (25°C)). Once the hardness and chewiness measurements have been taken, average hardness and average chewiness values are determined.

Improvements in average hardness of treated meat products comprising the soy protein-containing compositions manufactured in accordance with the present process of greater than from about 7% to about 13% have been observed.

Improvements in average chewiness of treated meat products comprising the soy protein-containing compositions manufactured in accordance with the present process of greater than from about 10% to about 18% have been observed.

In addition to having the improved functional properties above, treated meat products comprising the soy protein-containing compositions manufactured in accordance with the present processes described herein have an improved water holding capacity. As used herein, the term "water holding capacity" is defined as the maximum amount of water a material can absorb and retain under application of external forces, such as heating, cutting, mincing, pressing, and low speed centrifugation.

Water holding capacity can be calculated using the hardness and chewiness values discussed above. One suitable method for calculating water holding capacity is to compare the hardness and chewiness values of a sample of meat product (treated or untreated) with the hardness and chewiness values of a known standard product having a water holding capacity of 6.0 ("Standard A") and a known standard product having a water holding capacity of 5.0 ("Standard B"). To compare the hardness values of the sample and Standard A and B, Formula (I) below is used:

Formula (I)

$$[(\text{hardness of sample} - \text{hardness value of Standard A})/(\text{hardness of Standard A} - \text{hardness of Standard B}).$$

Once the hardness values have been compared, the chewiness values of the sample are compared with the chewiness values of Standard A and B using Formula (II) below:

Formula (II)

$$[(\text{chewiness of sample} - \text{chewiness value of Standard A})/(\text{chewiness of Standard A} - \text{chewiness of Standard B})].$$

Finally, to calculate the water holding capacity of the sample, Formula (III) below is used:

Formula (III):

$$[(6.0 + \text{Result of Formula (I)}) + (6.0 + \text{Result of Formula (II)})]/2$$

9

EP 1 671 552 B1

Improvements in the water holding capacity of the treated meat products that comprise the soy protein-containing composition of the present invention of greater than 6%, greater than 14%, and even greater than 23% have been observed.

EXAMPLES

The following examples are simply intended to further illustrate and explain the present invention. The invention, therefore, should not be limited to any of the details in these examples.

Example 1

In this Example, samples of soy protein-containing compositions comprising various lecithins are produced to be used in hot dogs. The functional properties of the compositions, such as gel strength, solubility, and salt tolerance, are evaluated. The hot dogs comprising the various soy protein-containing compositions are then tested to determine hardness, chewiness, and water holding capacity.

The extracted soy protein concentrate for use in the process of producing the soy protein-containing composition samples is commercially available extracted soy concentrate, Procon 2000 (The Solae Company, St. Louis, Missouri). The Procon 2000 is suspended in water having a temperature of 130°F (54°C) for a period of 10 minutes. Hydrochloric acid (HCl) is then added to the suspended soy protein concentrate, lowering the pH of the suspension to about 4.45 and forming a precipitated soy protein curd. The remaining liquid is an aqueous whey that contains soluble components such as carbohydrates. The curds are separated from the whey by centrifugation in a Decanter centrifuge (available from Sharples Co., North Attleboro, Mass.) at a speed of 4000 revolutions per minute (rpm).

The obtained soy protein curd is then hydrated in water to form a soy protein curd suspension. The soy protein curd suspension is pumped into a Cowles tank. Sodium hydroxide is added to the soy protein curd suspension to raise the pH to 7.2, forming a neutralized soy protein curd suspension.

Seven samples containing the neutralized soyprotein curd suspension are prepared for evaluation. Three samples are made by adding 1.0% (by weight dry basis) lecithin to the neutralized soy protein curd suspension prior to the heat treatment described below. Three samples were made by adding 1.0% (by weight dry basis) lecithin to the neutralized soy protein curd suspension after the below described heat treatment The remaining sample is a control, wherein no lecithin is added to the neutralized soy protein curd suspension,

Heat treatment is carried forth by heating the above seven samples to 305°F (152°C) for 15 seconds. Lecithin is added before heat treatment (pre heat) or after heat treatment (post heat). Various compositions of lecithins with various HLB values are employed. The lecithins and their points of addition to the neutralized soy protein curd suspension are shown in Table 1:

Table 1

| Lecithin | Modification of Lecithin | HLB | Source | Point of addition |
|---|---|---|---|---|
| Centrolene A | Hydroxilated Soy Lecithin | 10 | The Solae Co. | Pre heat |
| Centrophase 152 | Mixed phospholipid lecithin | 4 | The Solae Co. | Pre heat |
| Centrophase HR-4B | Acetylated soy lecithin | 7 | The Solae Co. | Pre heat |
| Centrolene A | Hydroxilated Soy Lecithin | 10 | The Solae Co. | Post heat |
| Centrophase 152 | Mixed phospholipid lecithin | 4 | The Solae Co. | Post heat |
| Centrophase HR-4B | Acetylated soy lecithin | 7 | The Solae Co. | Post heat |
| Control | N/A | N/A | The Solae Co. | N/A |
| N/A = Not Applicable | | | | |

Following the heat treatment, the samples, including the control sample, are dried by spray drying at a temperature of 180°F (83°C) to form soy protein-containing compositions of which the first six samples contain various types of lecithin.

The water solubility of the soy protein-containing compositions is determined using the Nitrogen Solubility Index (NSI) as described herein above. The results of this test are shown in Table 2 below:

Table 2

| Lechitin | Point of Addition | NSI (%) |
|---|---|---|
| Centrolene A | Pre heat | 77.2 |
| Centrophase 152 | Pre heat | 72.8 |
| Centrophase HR-4B | Pre heat | 76.5 |
| Centrolene A | Post heat | 71.4 |
| Centmpbase 152 | Post heat | 71.3 |
| Centrophase HR-4B | Post heat | 71.2 |
| Control | N/A | 70.3 |
| N/A = Not applicable | | |

As shown in Table 2 above, the pre heating addition of 1.0% Centrolene A and 1.0% Centrophase HR-4B increases solubility from 70% to 77%. Additionally, the pre heat addition of 1,0% Centrophase 152 increases NSI from 70% to 73%. These results show the effect of changing the soy protein network by adding lecithin prior to heat treatment. By contrast, the post heat treatment addition of lecithin does not change the solubility of the compositions. These results show that the solubility of the soy protein-containing composition is dependent upon when the lecithin is added relevant to the heat treatment of the soy protein-containing composition.

The viscosities of the soy protein-containing compositions (at 14% solid basis) are determined using the RVA Method. The viscosities of the various compositions are shown in Table 3 below:

Table 3:

| Lecithin | Point of Addition | Viscosity (cP) |
|---|---|---|
| Centrolene A | Pre heat | 9867 |
| Centrophase 152 | Pre heat | 4678.3 |
| Centrophase HR-4B | Pre heat | 9073.7 |
| Centrolene A | Post heat | 4461 |
| Centrophase 152 | Post heat | 6843.7 |
| Centrophase HR-4B | Post heat | 3960 |
| Control | N/A | 10343 |
| N/A = Not Applicable | | |

As shown in the data of Table 3, pre heat addition of all of the lecithins reduces viscosity by about 34% to 62%, Specifically, the pre and post heat additions of Centrophase 152 reduce the viscosity by 34% to 50%. Post heat additions of Centrophase HR-4B and Centrolene A reduce the viscosity of the soyprotein-containing composition by 57% to 62%. Reducing viscosity can improve the processing of food products where there is a high concentration of feed.

In addition to solubility and viscosity, the cooked gel strengths of the soy protein-containing compositions made by adding lecithin prior to heat treatment are measured. The cooked gel strengths of the soy protein-containing compositions are tested in an environment comprising 2% (by weight) salt and in an environment free of salt. Cooked gel strength is measured by cooking the composition samples for 30 minutes in steam at a temperature of 180°F (82°C). The cooked gel strength is then measured by an Instron analyzer (available from Instron Corporation, Canton, Maine). The results of the measurements are show in Table 4 below:

Table 4:

| Lecithin | Point of Addition | Cooked Gel Strength (without salt) (g) | Cooked Gel Strength (with salt) (g) |
|---|---|---|---|
| Centrolene A | Pre heat | 1922.465 | 2249.095 |
| Centrophase 152 | Pre heat | 1264.075 | 1802.42 |

(continued)

| Lecithin | Point of Addition | Cooked Gel Strength (without salt) (g) | Cooked Gel Strength (with salt) (g) |
|---|---|---|---|
| Centrophase HR-4B | Pre heat | 2068.725 | 2284.445 |
| Control | N/A | 1225.645 | 1575.095 |
| N/A = Not Applicable | | | |

The data in Table 4 show that pre heat addition of 1.0% Centrophase HR-4B increases cooked gel strength in the presence of 2% salt by 45% compared to the control, Additionally, pre heat addition of 1.0% Centrophase 152 and 1.0% Centrolene A increases cooked gel strength in the presence of 2% salt by 14% and 43% respectively.

The soy protein-containing compositions are then used to treat hot dogs. To treat the hot dogs, the soy protein-containing compositions are mixed with the other ingredients of the hot dog for 4 minutes on high speed in a food cutter or chopper bowl. The mix is then used to fill cellulose casings and cooked in steam at a temperature of 180°F (82°C) until the internal temperature of the hot dog is 162°F (72°C). The treated hot dogs are then removed and allowed to cool to room temperature (i.e., about 77°F (25°C)) for 24 hours.

Using an Instron Analyzer, available from Instron Corporation, Canton, Maine, the hot hardness, cold hardness, hot chewiness, and cold chewiness of the treated hot dog samples are measured. Hot hardness and hot chewiness are measured by heating the hot dog in boiling water for 7. minutes or until the internal temperature of the hot dog is about 160°F (71 °C). Cold hardness and cold chewiness are measured at room temperature (i.e., about 77°F (25°C).

Using the hot and cold hardness and hot and cold chewiness of the hot dogs, the hot water holding capacity (WHC) and the cold water holding capacity (WHC) of the hot dogs are calculated. The hot and cold WHC values are averaged to determine the average WHC of the hot dog. Additionally, the average WHC is normalized with the control having a WHC 6.0. The results are shown in Table 5 below:

Table 5

| Lecithin | Point of Addition | Cold Hardness (g) | Hot Hardness (g) | Cold Chewiness (g) | Hot Chewiness (g) | Normalized Average WHC |
|---|---|---|---|---|---|---|
| Centrolene A | Pre heat | 6107 | 3333 | 1190 | 789 | 6.38 |
| Centrophase 152 | Pre heat | 6171 | 3476 | 1201 | 799 | 6.48 |
| Centrophase HR- 4B | Pre heat | 5713 | 3264 | 1132 | 747 | 6.19 |
| Centrolene A | Post heat | 5728 | 2947 | 1090 | 689 | 5.90 |
| Centrophase 152 | Post heat | 5726 | 3137 | 1093 | 751 | 6.10 |
| Centrophase HR- 4B | Post heat | 5657 | 3314 | 995 | 731 | 6.00 |
| Control | N/A | 5728 | 3085 | 1090 | 677 | 6.00 |
| N/A = Not Applicable | | | | | | |

As shown in Table 5, pre heat treatment addition of 1.0% Centrolene A and 1.0% Centrophase 152 increases water holding capacity from about 6% to 8%, respectively. Additionally, the pre heat treatment addition of 1.0% Centrophase HR-4B also increases water holding capacity of the hot dog. The pre heat treatment addition of 1.0% Centrophase 152 and Centrolene A additionally increases hot dog hardness by about 7% to 13% and hot dog chewiness by about 10% to 18% over the control. As such, it can be seen that soy protein-containing compositions comprising pre heat addition of 1.0% (by weight dry basis) lecithins can improve hot dog functionality.

In a corresponding example, the functional properties of soy protein-containing compositions comprising 1.0% (by weight dry basis) non-genetically modified, identically preserved (IP) lecithin (STERNPHIL MB 58, The Solae Co., St. Louis, Missouri) are tested. It is found that 1.0% STERNPHIL MB 58 added pre heat increases viscosity by about 35 %, while post heat addition does not affect viscosity. Additionally, pre heat addition of 1.0% STERNPHIL MB 58 increases cooked gel strength in environments both without salt and with salt, while post heat addition decreases cooked gel strength

These soy protein-containing compositions are then used to treat hot dogs. Hot and cold hardness, hot and cold chewiness, and water holding capacity of the hot dogs are then tested. Pre heat addition of 1.0% STERNPHIL MB 58 increases hot dog hardness by 10% and hot dog chewiness by 19% over the control. Additionally, pre heat addition of 1.0% STERNPHIL MB 58 increases water holding capacity by about 12% compared to the control.

Example 2

In this Example, samples of soy protein-containing compositions comprising various lecithins are produced to be used in hot dogs. The functional properties of the compositions, such as gel strength, solubility, and salt tolerance, are evaluated. The hot dogs are then tested to determine hardness, chewiness, and water holding capacity.

The method to produce the samples of soy protein-containing compositions is the same as that used in Example 1 except that the neutralized soy protein curd suspension is heated both prior to and after adding 1.0% (by weight dry basis) lecithin. In three of the samples, lecithin is added between the heat treatments when the pH of the heat neutralized soy protein curd suspension is 7.2. In another three samples, lecithin is added between the heat treatments when the pH of the heat neutralized soy protein curd suspension is 8.0. After the lecithination at a pH of 8,0, the pH is lowered to 7.2 before spray drying. The lecithins used in the compositions are shown in Table 6:

Table 6:

| Lecithin | Modification of Lecithin | HLB | Source | pH at point of addition |
|---|---|---|---|---|
| Centrolene A | Hydroxilated Soy Lecithin | 10 | The Solae Co. | 7.2 |
| Centrophase 152 | Mixed phospholipid lecithin | 4 | The Solae Co. | 7.2 |
| Centrophase 152 IP | Mixed phospholipid lecithin | 4 | The Solae Co. | 7.2 |
| Centrolene A | Hydroxilated Soy Lecithin | 10 | The Solae Co. | 8.0 |
| Centrophase 152 | Mixed phospholipid lecithin | 4 | The Solae Co. | 8.0 |
| Centrophase 152 IP | Mixed phospholipid lecithin | 4 | The Solae Co. | 8.0 |
| Control A[1] | N/A | 10 | The Solae Co. | 7.2 |
| Control B[2] | N/A | 10 | The Solae Co. | 7.2 |
| 1. Control A is only heat treated once. 2. Control B is heat treated twice. Control B is heated then allowed to cool and then heated again, N/A = Not Applicable | | | | |

Using the Nitrogen Solubility Index and Salt Tolerance Index, the solubility of the compositions are determined both between heat treatments at a pH of 7.2 and between heat treatments at a pH of 8.0. The results are shown in Table 7 below:

Table 7:

| Lecithin | pH at point of addition | NSI (%) | STI (%) |
|---|---|---|---|
| Centrolene A | 7.2 | 73.9 | 71.6 |
| Centrophase 152 | 7.2 | 72.3 | 68.4 |
| Centrorphase 152IP | 7.2 | 72.3 | 68.4 |
| Centrolene A | 8.0 | 80.9 | 79.8 |
| Centrophase 152 | 8.0 | 72.7 | 71.8 |
| Centrophase 152 IP | 8.0 | 77.0 | 76.5 |
| Control A | 7.2 | 75.3 | 72.9 |

(continued)

| Lecithin | pH at point of addition | NSI (%) | STI (%) |
|---|---|---|---|
| Control B | 7.2 | 73.7 | 72.5 |
| N/A=Not Applicable | | | |

As shown in Table 7 above, the addition of 1.0% lecithin between heat treatments at a pH of 7.2 does not increase solubility and salt tolerance. However, the addition of 1.0% Centrolene A between heat treatments at a pH of 8.0 does increase solubility from 75% to 81% and increases salt tolerance from 73% to 80%. These results show that the solubility and salt tolerance of the soy protein-containing composition is dependent upon the type of lecithin added and the pH of the neutralized soy protein curd suspension during addition.

The viscosities of the soy protein-containing compositions (at 5% solid basis) comprising both the lecithin addition between heat treatments at a pH of 7.2 and the addition between heat treatments at a pH of 8.0 were determined using the Brookfield Method discussed above. The viscosities of the various compositions are shown in Table 8 below:

Table 8:

| Lecithin | pH at point of addition | Viscosity (cP) |
|---|---|---|
| Centrolene A | 7.2 | 900.8 |
| Centrophase 152 | 7.2 | 439.9 |
| Centrophase 152 IP | 7.2 | 483.9 |
| Centrolene A | 8.0 | 312.9 |
| Centrophase 152 | 8.0 | 435.4 |
| Cenuophase 152 IP | 8.0 | 858.8 |
| Control A | 7.2 | 167.8 |
| Control B | 7.2 | 375.9 |
| N/A = Not Applicable | | |

As shown in the data of Table 8, all the samples comprising 1.0% lecithin added between two heat treatments increase the viscosity. Specifically, the 1.0% Centrolene A added between heat treatments at a pH of 7.2 increases the viscosity by 5.1 times over the control.

In addition to solubility, salt tolerance, and viscosity, the cooked gel strengths of the soy protein-containing compositions made by adding lecithin between heat treatments are measured using the method of Example 1, The cooked gel strengths of the soy protein-containing compositions are tested in an environment comprising 2% (by weight) salt and in an environment free of salt. The results of the measurements are show in Table 9 below:

Table 9:

| Lecithin | pH at point of addition | Cooked Gel Strength (without salt) (g) | Cooked Gel Strength (with salt) (g) |
|---|---|---|---|
| Centrolene A | 7.2 | 1320.71 | 1385.85 |
| Centrophase 152 | 7.2 | 941.00 | 1183.30 |
| Centrophase 152 IP | 7.2 | 1166.07 | 1474.46 |
| Centrolene A | 8.0 | 1400.09 | 1851.74 |
| Centrophase 152 | 8.0 | 1239.47 | 1650.81 |
| Centrophase 152 IP | 8.0 | 1308.03 | 1401.96 |
| Control A | 7.2 | 1073.52 | 1444.06 |

(continued)

| Lecithin | pH at point of addition | Cooked Gel Strength (without salt) (g) | Cooked Gel Strength (with salt) (g) |
|---|---|---|---|
| Control B | 7.2 | 980.73 | 1288.25 |
| N/A = Not Applicable | | | |

The data in Table 9 show that the addition of 1.0% lecithin between heat treatments at a pH of 7,2 decreases cooked gel strength in the presence of 2% salt by 45% compared to the control. However, the addition of 1.0% Centrophase 152 and 1.0% Centrolene A between heat treatments at a pH of 8.0 increases cooked gel strength in the presence of 2% salt by 14% and 28% respectively. Additionally shown by the data, Control B, being heat treated twice, has a decreased gel strength compared to Control A, which is only heated once.

The soy protein-containing compositions are then used to treat hot dogs as in Example 1. Additionally, the hot dog samples are tested for hot hardness, cold hardness, hot chewiness, and cold chewiness using the methods of Example 1. Using the hot and cold hardness and the hot and cold chewiness, the normalized average water holding capacity is determined as in Example 1. The results of these tests are shown in Table 10:

Table 10:

| Lecithin | pH at point of addition | Cold Hardness (g) | Hot Hardness (g) | Cold Chewiness (g) | Hot Chewiness (g) | Normalized Average WHC |
|---|---|---|---|---|---|---|
| Centrolene A | 7.2 | 4974 | 2814 | 742 | 526 | 6.75 |
| Centrophase 152 | 7.2 | 5069 | 2636 | 752 | 519 | 6.86 |
| Centrophase 152 IP | 7.2 | 4804 | 2614 | 717 | 483 | 6.53 |
| Centrolene A | 8.0 | 5199 | 2421 | 879 | 404 | 7.42 |
| Centrophase 152 | 8.0 | 4865 | 2760 | 661 | 488 | 6.38 |
| Ccntropbase 152 IP | 8.0 | 4452 | 2654 | 672 | 510 | 6.10 |
| Control A | 7.2 | 4378 | 2510 | 659 | 480 | 6.00 |
| Control B | 7.2 | 4800 | 2560 | 659 | 476 | 6.32 |
| N/A = Not Applicable | | | | | | |

As shown in Table 10, 1-0% lecithins added between heat treatments at a pH of 7.2 increase water holding capacity from 6.0 to 6.53 to 6.86. These lecithins also improve hot dog hardness by 10% to 16% and chewiness by 9% to 14% over the control.

Additionally, 1.0% lecithins added between heat treatments at a pH of 8.0 increase water holding capacity from 6.0 to 6.10 to 7.42. It can also be seen that Control B, heat treated twice, has an increased water holding capacity as compared to the single heat treated Control A. This supports the theory that providing two heat treatments can further improve water holding capacity in the soy protein-containing compositions,

The 1.0% Centrophase 152 and 1,0% Centrolene A added between heat treatments at a pH of 8.0 increase hot dog hardness by 11% and 19% respectively. 1.0% Centrolene A added between heat treatments at a pH of 8.0 also increases hot dog chewiness by about 33% over the control. As such, it can be seen that soy protein-containing compositions made by adding 1.0% lecithin between heat treatments can significantly improve hot dog functionality.

In view of the above, it will be seen that the several objects of the invention are achieved and other advantageous results obtained.

The term "by weight" is used throughout the application to describe the amounts of components in the soy protein-containing composition. Unless otherwise specified, the term "by weight" is intended to mean by weight on an as is basis, without any moisture added or removed from the product. The term by weight dry basis is intended to mean on a moisture-free basis, in which the moisture has been removed.

**Claims**

1. A soy protein-containing composition comprising from 98.5% (by weight dry basis) to 99.5% (by weight dry basis) precipitated soy protein curd and from 0.5% (by weight dry basis) to 1.5% (by weight dry basis) lecithin, wherein the precipitated soy protein curd comprises from 65% (by weight curd) to 85% (by weight curd) soy protein, from 10% (by weight curd) to 20% (by weight curd) carbohydrate, from 0.5% (by weight curd) to 2.0% (by weight curd) fat, from 3% (by weight curd) to 8% (by weight curd) ash, and from 1% (by weight curd) to 10% (by weight curd) moisture, and wherein the lecithin has an HLB value of from 4 to 10.

2. The soy protein-containing composition as set forth in claim 1 wherein the lecithin has an HLB value of from 4 to 7.

3. The soy protein-containing composition as set forth in claim 1 comprising 1.0% (by weight dry basis) lecithin.

4. The soy protein-containing composition as set forth in claim 1 further comprising a sucrose ester.

5. The soy protein-containing composition as set forth in claim 4 wherein the soy protein-containing composition comprises from 0.5% (by weight dry basis) to 1.5% (by weight dry basis) sucrose ester.

6. The soy protein-containing composition as set forth in claim 1 further comprising a fatty acid or its sodium salt.

7. The soy protein-containing composition as set forth in claim 6 wherein the soy protein-containing composition comprises from 0.5% (by weight dry basis) to 1.5% (by weight dry basis) of a fatty acid or its sodium salt.

8. The soy protein-containing composition as set forth in claim 1 wherein the composition has a gel strength measured in an environment comprising 2% (by weight) salt of at least 2200 grams.

9. The soy protein-containing composition as set forth in claim 1 wherein the composition has a Nitrogen Solubility Index of at least 70%.

10. The soy protein-containing composition as set forth in claim 1 wherein the composition has a Salt Tolerance Index of at least 70%.

11. A process for producing a soy protein-containing composition, wherein the soy protein-containing composition comprises from 98.5% (by weight dry basis) to 99.5% (by weight dry basis) precipitated soy protein curd and from 0.5% (by weight dry basis) to 1.5% (by weight dry basis) lecithin, wherein the precipitated soy protein curd comprises from 65% (by weight curd) to 85% (by weight curd) soy protein, from 10% (by weight curd) to 20% (by weight curd) carbohydrate, from 0.5% (by weight curd) to 2.0% (by weight curd) fat, from 3,0% (by weight curd) to 8.0% (by weight curd) ash, and from 1.0% (by weight curd) to 10% (by weight curd) moisture, and wherein the lecithin has an HLB value of from 4 to 10 and wherein the process comprises:

   extracting a soy protein concentrate from soy flakes with an aqueous alcohol wash;
   suspending the extracted soy protein concentrate with a wash solution comprising water;
   contacting the suspended soy protein concentrate with an acid to form a precipitated soy protein curd;
   contacting the precipitated soy protein curd with a hydrating solution comprising water to form a soy protein curd suspension;
   contacting the soy protein curd suspension with a basic solution to form a neutralized soy protein curd suspension;
   introducing lecithin into the neutralized soy protein curd suspension to form a lecithin-neutralized soy protein curd suspension;
   heating the lecithin-neutralized soy protein curd suspension; and
   drying the heated lecithin-neutralized soy protein curd suspension to form a soy protein-containing composition.

12. The process as set forth in claim 11 wherein the soy protein-containing composition comprises 1.0% (by weight dry basis) lecithin.

13. The process as set forth in claim 11 wherein the lecithin has an HLB value of from 4 to 7.

14. The process as set forth in claim 11 further comprising introducing a sucrose ester into the neutralized soy protein curd suspension.

15. The process as set forth in claim 14 wherein the sucrose ester is introduced in an amount of from 0.5% (by weight dry basis) to 1.5% (by weight dry basis).

16. The process as set forth in claim 11 further comprising introducing a fatty acid or its sodium salt into the neutralized soy protein curd suspension.

17. The process as set forth in claim 16 wherein the fatty acid or its sodium salt is introduced in an amount of from 0.5% (by weight dry basis) to 1.5% (by weight dry basis).

18. The process as set forth in claim 11 wherein the soy protein-containing composition has a cooked gel strength measured in an environment comprising 2% (by weight) salt of at least 2200 grams.

19. The process as set forth in claim 11 wherein the soy protein-containing composition has a Nitrogen Solubility Index of at least 70%.

20. The process of claim 11, further comprising:

     heating the neutralized soy protein curd suspension before introducing lecithin.

21. The process as set forth in claim 20 wherein the soy protein-containing composition comprises 1.0% (by weight dry basis) lecithin.

22. The process as set forth in claim 20 wherein the lecithin has an HLB value of from 4 to 7.

23. The process as set forth in claim 20 wherein the heated neutralized soy protein curd suspension has a pH of 7.2 when introducing lecithin to the heated neutralized soy protein curd suspension.

24. The process as set forth in claim 20 further comprising introducing a sucrose ester into the heated neutralized soy protein curd suspension.

25. The process as set forth in claim 24 wherein the sucrose ester is introduced in an amount of from 0.5% (by weight dry basis) to 1.5% (by weight dry basis).

26. The process as set forth in claim 20 further comprising introducing a fatty acid or its sodium salt into the heated neutralized soy protein curd suspension.

27. The process as set forth in claim 26 wherein the fatty acid or its sodium salt is introduced in an amount of from 0.5% (by weight dry basis) to 1.5% (by weight dry basis).

28. The process as set forth in claim 20 wherein the soy protein-containing composition has a cooked gel strength measured in an environment comprising 2% (by weight) salt of at least 2200 grams.

**Patentansprüche**

1. Sojaprotein enthaltende Zusammensetzung, die 98,5 % (bezogen auf das Trockengewicht) bis 99,5 % (bezogen auf das Trockengewicht) ausgefällten Sojaproteinquark (Tofu) und 0,5 % (bezogen auf das Trockengewicht) bis 1,5 % (bezogen auf das Trockengewicht) Lecithin umfasst, wobei der ausgefällte Tofu 65 % (bezogen auf das Gewicht des Tofus) bis 85 % (bezogen auf das Gewicht des Tofus) Sojaprotein, 10 % (bezogen auf das Gewicht des Tofus) bis 20 % (bezogen auf das Gewicht des Tofus) Kohlenhydrat, 0,5 % (bezogen auf das Gewicht des Tofus) bis 2,0 % (bezogen auf das Gewicht des Tofus) Fett, 3 % (bezogen auf das Gewicht des Tofus) bis 8 % (bezogen auf das Gewicht des Tofus) Asche und 1 % (bezogen auf das Gewicht des Tofus) bis 10 % (bezogen auf das Gewicht des Tofus) Feuchtigkeit umfasst, und wobei das Lecithin einen HLB-Wert von 4 bis 10 hat.

2. Sojaprotein enthaltende Zusammensetzung nach Anspruch 1, wobei das Lecithin einen HLB-Wert von 4 bis 7 hat.

3. Sojaprotein enthaltende Zusammensetzung nach Anspruch 1, die 1,0 % (bezogen auf das Trockengewicht) Lecithin umfasst.

**4.** Sojaprotein enthaltende Zusammensetzung nach Anspruch 1, die ferner einen Sucroseester umfasst.

**5.** Sojaprotein enthaltende Zusammensetzung nach Anspruch 4, wobei die Sojaprotein enthaltende Zusammensetzung 0,5 % (bezogen auf das Trockengewicht) bis 1,5 % (bezogen auf das Trockengewicht) Sucroseester umfasst.

**6.** Sojaprotein enthaltende Zusammensetzung nach Anspruch 1, die ferner eine Fettsäure oder ihr Natriumsalz umfasst.

**7.** Sojaprotein enthaltende Zusammensetzung nach Anspruch 6, wobei die Sojaprotein enthaltende Zusammensetzung 0,5 % (bezogen auf das Trockengewicht) bis 1,5 % (bezogen auf das Trockengewicht) einer Fettsäure oder ihres Natriumsalzes umfasst.

**8.** Sojaprotein enthaltende Zusammensetzung nach Anspruch 1, wobei die Zusammensetzung eine Gelfestigkeit, gemessen in einer Umgebung, die 2 Gew.% Salz umfasst, von mindestens 2200 Gramm hat.

**9.** Sojaprotein enthaltende Zusammensetzung nach Anspruch 1, wobei die Zusammensetzung einen Stickstofflöslichkeitsindex von mindestens 70 % hat.

**10.** Sojaprotein enthaltende Zusammensetzung nach Anspruch 1, wobei die Zusammensetzung einen Salztoleranzindex von mindestens 70 % hat.

**11.** Verfahren zur Herstellung einer Sojaprotein enthaltenden Zusammensetzung, wobei die Sojaprotein enthaltende Zusammensetzung 98,5 % (bezogen auf das Trockengewicht) bis 99,5 % (bezogen auf das Trockengewicht) ausgefällten Tofu und 0,5 % (bezogen auf das Trockengewicht) bis 1,5 % (bezogen auf das Trockengewicht) Lecithin umfasst, wobei der ausgefällte Tofu 65 % (bezogen auf das Gewicht des Tofus) bis 85 % (bezogen auf das Gewicht des Tofus) Sojaprotein, 10 % (bezogen auf das Gewicht des Tofus) bis 20 % (bezogen auf das Gewicht des Tofus) Kohlenhydrat, 0,5 % (bezogen auf das Gewicht des Tofus) bis 2,0 % (bezogen auf das Gewicht des Tofus) Fett, 3,0 % (bezogen auf das Gewicht des Tofus) bis 8,0 % (bezogen auf das Gewicht des Tofus) Asche und 1,0 % (bezogen auf das Gewicht des Tofus) bis 10 % (bezogen auf das Gewicht des Tofus) Feuchtigkeit umfasst, und wobei das Lecithin einen HLB-Wert von 4 bis 10 hat, und das Verfahren umfasst:

Extrahieren eines Sojaproteinkonzentrats aus Sojaflocken mit einer wässrigen Alkoholwäsche;
Suspendieren des extrahierten Sojabohnenkonzentrats mit einer Waschlösung, die Wasser umfasst;
Kontaktieren des suspendierten Sojaproteinkonzentrats mit einer Säure unter Bildung eines ausgefällten Tofus;
Kontaktieren des ausgefällten Tofus mit einer Hydratisierungslösung, die Wasser umfasst, um eine Tofususpension zu bilden;
Kontaktieren der Tofususpension mit einer basischen Lösung, um eine neutralisierte Tofususpension zu bilden;
Einbringen von Lecithin in die neutralisierte Tofususpension unter Bildung einer Lecithin-neutralisierten Tofususpension;
Erwärmen der Lecithin-neutralisierten Tofususpension und
Trocknen der erwärmten Lecithin-neutralisierten Tofususpension, um eine Sojaprotein enthaltende Zusammensetzung zu bilden.

**12.** Verfahren nach Anspruch 11, wobei die Sojaprotein enthaltende Zusammensetzung 1,0 (bezogen auf das Trockengewicht) Lecithin umfasst.

**13.** Verfahren nach Anspruch 11, wobei das Lecithin einen HLB-Wert von 4 bis 7 hat.

**14.** Verfahren nach Anspruch 11, wobei ferner ein Sucroseester in die neutralisierte Tofususpension eingebracht wird.

**15.** Verfahren nach Anspruch 14, wobei der Sucroseester in einer Menge von 0,5 % (bezogen auf das Trockengewicht) bis 1,5 % (bezogen auf das Trockengewicht) eingebracht wird.

**16.** Verfahren nach Anspruch 11, wobei in die neutralisierte Tofususpension ferner eine Fettsäure oder ihr Natriumsalz eingebracht wird.

**17.** Verfahren nach Anspruch 16, wobei die Fettsäure oder ihr Natriumsalz in einer Menge von 0,5 % (bezogen auf das Trockengewicht) bis 1,5 % (bezogen auf das Trockengewicht) eingebracht wird.

**18.** Verfahren nach Anspruch 11, wobei die Sojaprotein enthaltende Zusammensetzung eine Gelfestigkeit im gegarten Zustand, gemessen in einer Umgebung, die 2 Gew.% Salz umfasst, von mindestens 2200 Gramm aufweist.

**19.** Verfahren nach Anspruch 11, wobei die Sojaprotein enthaltende Zusammensetzung einen Stickstofflöslichkeitsindex von mindestens 70 % aufweist.

**20.** Verfahren nach Anspruch 11, bei dem ferner die neutralisierte Tofususpension erwärmt wird, bevor Lecithin eingebracht wird.

**21.** Verfahren nach Anspruch 20, wobei die Sojaprotein enthaltende Zusammensetzung 1,0 % (bezogen auf das Trockengewicht) Lecithin umfasst.

**22.** Verfahren nach Anspruch 20, wobei das Lecithin einen HLB-Wert von 4 bis 7 hat.

**23.** Verfahren nach Anspruch 20, wobei die erwärmte neutralisierte Tofususpension einen pH-Wert von 7,2 hat, wenn Lecithin in die erwärmte neutralisierte Tofususpension eingebracht wird.

**24.** Verfahren nach Anspruch 20, wobei ferner ein Sucroseester in die erwärmte neutralisierte Tofususpension eingebracht wird.

**25.** Verfahren nach Anspruch 24, wobei der Sucroseester in einer Menge von 0,5 % (bezogen auf das Trockengewicht) bis 1,5 % (bezogen auf das Trockengewicht) eingebracht wird.

**26.** Verfahren nach Anspruch 20, wobei ferner eine Fettsäure oder ihr Natriumsalz in die erwärmte neutralisierte Tofususpension eingebracht wird.

**27.** Verfahren nach Anspruch 26, wobei die Fettsäure oder ihr Natriumsalz in einer Menge von 0,5 % (bezogen auf das Trockengewicht) bis 1,5 % (bezogen auf das Trockengewicht) eingebracht wird.

**28.** Verfahren nach Anspruch 20, wobei die Sojaprotein enthaltende Zusammensetzung eine Gelfestigkeit im gegarten Zustand, gemessen in einer Umgebung, die 2 Gew.% Salz umfasst, von mindestens 2200 Gramm hat.

**Revendications**

**1.** Composition contenant des protéines de soja comprenant de 98,5 % (en poids sur sec) à 99,5 % (en poids sur sec) de caillé de protéines de soja précipité et de 0,5 % (en poids sur sec) à 1,5 % (en poids sur sec) de lécithine, dans laquelle le caillé de protéines de soja précipité comprend de 65 % (en poids de caillé) à 85 % (en poids de caillé) de protéines de soja, de 10 % (en poids de caillé) à 20 % (en poids de caillé) de glucides, de 0,5 % (en poids de caillé) à 2,0 % (en poids de caillé) de graisses, de 3 % (en poids de caillé) à 8 % (en poids de caillé) de cendres, et de 1 % (en poids de caillé) à 10 % (en poids de caillé) d'humidité, et dans laquelle la lécithine a un indice HLB de 4 à 10.

**2.** Composition contenant des protéines de soja selon la revendication 1 dans laquelle la lécithine a un indice HLB de 4 à 7.

**3.** Composition contenant des protéines de soja selon la revendication 1 comprenant 1,0 % (en poids sur sec) de lécithine.

**4.** Composition contenant des protéines de soja selon la revendication 1 comprenant en outre un ester de saccharose.

**5.** Composition contenant des protéines de soja selon la revendication 4 dans laquelle la composition contenant des protéines de soja comprend de 0,5 % (en poids sur sec) à 1,5 % (en poids sur sec) d'ester de saccharose.

**6.** Composition contenant des protéines de soja selon la revendication 1 comprenant en outre un acide gras ou son sel de sodium.

**7.** Composition contenant des protéines de soja selon la revendication 6 dans laquelle la composition contenant des protéines de soja comprend de 0,5 % (en poids sur sec) à 1,5 % (en poids sur sec) d'un acide gras ou son sel de sodium.

8. Composition contenant des protéines de soja selon la revendication 1 dans laquelle la composition a une résistance de gel, mesurée dans un environnement comprenant 2 % (en poids) de sel d'au moins, 2200 grammes.

9. Composition contenant des protéines de soja selon la revendication 1 dans laquelle la composition a un indice de solubilité de l'azote d'au moins 70 %.

10. Composition contenant des protéines de soja selon la revendication 1 dans laquelle la composition a un indice de tolérance au sel d'au moins 70 %.

11. Procédé pour produire une composition contenant des protéines de soja, dans lequel la composition contenant des protéines de soja comprend de 98,5 % (en poids sur sec) à 99,5 % (en poids sur sec) de caillé de protéines de soja précipité et de 0,5 % (en poids sur sec) à 1,5 % (en poids sur sec) de lécithine, où le caillé de protéines de soja précipité comprend de 65 % (en poids de caillé) à 85 % (en poids de caillé) de protéines de soja, de 10% (en poids de caillé) à 20% (en poids de caillé) de glucides, de 0,5 % (en poids de caillé) à 2,0 % (en poids de caillé) de graisses, de 3,0 % (en poids de caillé) à 8,0 % (en poids de caillé) de cendres, et de 1,0 % (en poids de caillé) à 10 % (en poids de caillé) d'humidité, et où la lécithine a un indice HLB de 4 à 10 et où le procédé comprend les étapes consistant à :

extraire un concentré de protéines de soja à partir de flocons de soja avec un lavage d'alcool aqueux ;
mettre en suspension le concentré de protéines de soja extrait avec une solution de lavage comprenant de l'eau ;
mettre en contact le concentré de protéines de soja en suspension avec un acide pour former un caillé de protéines de soja concentré ;
mettre en contact le caillé de protéines de soja précipité avec une solution hydratante comprenant de l'eau pour former une suspension de caillé de protéines de soja ;
mettre en contact la suspension de caillé de protéines de soja avec une solution basique pour former une suspension de caillé de protéines de soja neutralisée ;
introduire de la lécithine dans la suspension de caillé de protéines de soja neutralisée pour former une suspension de caillé de protéines de soja neutralisée-lécithine ;
chauffer la suspension de caillé de protéines de soja neutralisée-lécithine ; et
sécher la suspension de caillé de protéines de soja neutralisée-lécithine chauffée pour former une composition contenant des protéines de soja.

12. Procédé selon la revendication 11 dans lequel la composition contenant des protéines de soja comprend 1,0 % (en poids sur sec) de lécithine.

13. Procédé selon la revendication 11 dans lequel la lécithine a un indice HLB de 4 à 7.

14. Procédé selon la revendication 11 comprenant en outre l'introduction d'un ester de saccharose dans la suspension de caillé de protéines de soja neutralisée.

15. Procédé selon la revendication 14 dans lequel l'ester de saccharose est introduit en une quantité de 0,5 % (en poids sur sec) à 1,5 % (en poids sur sec).

16. Procédé selon la revendication 11 comprenant en outre l'introduction d'un acide gras ou son sel de sodium dans la suspension de caillé de protéines de soja neutralisée.

17. Procédé selon la revendication 16 dans lequel l'acide gras ou son sel de sodium est introduit en une quantité de 0,5 % (en poids sur sec) à 1,5 % (en poids sur sec).

18. Procédé selon la revendication 11 dans lequel la composition contenant des protéines de soja a une résistance de gel après cuisson mesurée dans un environnement comprenant 2 % (en poids) de sel d'au moins 2200 grammes.

19. Procédé selon la revendication 11 dans lequel la composition contenant des protéines de soja a un indice de solubilité de l'azote d'au moins 70 %.

**20.** Procédé de la revendication 11, comprenant en outre l'étape consistant à chauffer la suspension de caillé de protéines de soja neutralisée avant d'introduire la lécithine.

**21.** Procédé selon la revendication 20 dans lequel la composition contenant des protéines de soja comprend 1,0 % (en poids sur sec) de lécithine.

**22.** Procédé selon la revendication 20 dans lequel la lécithine a un indice HLB de 4 à 7.

**23.** Procédé selon la revendication 20 dans lequel la suspension de caillé de protéines de soja neutralisée chauffée présente un pH de 7,2 lors de l'introduction de lécithine dans la suspension de caillé de protéines de soja neutralisée chauffée.

**24.** Procédé selon la revendication 20 comprenant en outre l'introduction d'un ester de saccharose dans la suspension de caillé de protéines de soja neutralisée chauffée.

**25.** Procédé selon la revendication 24 dans lequel l'ester de saccharose est introduit en une quantité de 0,5 % (en poids sur sec) à 1,5 % (en poids sur sec).

**26.** Procédé selon la revendication 20 comprenant en outre l'introduction d'un acide gras ou son sel de sodium dans la suspension de caillé de protéines de soja neutralisée chauffée.

**27.** Procédé selon la revendication 26 dans lequel l'acide gras ou son sel de sodium est introduit en une quantité de 0,5 % (en poids sur sec) à 1,5 % (en poids sur sec).

**28.** Procédé selon la revendication 20 dans lequel la composition contenant des protéines de soja a une résistance de gel après cuisson, mesurée dans un environnement comprenant 2 % (en poids) de sel, d'au moins 2200 grammes.

**EP 1 671 552 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6465037 B
- US 6423364 B
- US 6355295 B, Altemueller
- US 6187367 B, Cho
- US 6132795 A, Holbrook